# EUROPÄISCHE PATENTSCHRIFT

(11) **EP 2 729 224 B1**
(45) Veröffentlichungstag und Bekanntmachung des Hinweises auf die Patenterteilung: **29.07.2015**
(21) Anmeldenummer: 12742777.1
(22) Anmeldetag: 19.06.2012
(51) Int. Cl.: A63C 17/14, A63C 17/01, A63C 17/06

(54) **BREMSVORRICHTUNG FÜR ROLLSCHUHE, ROLLBRETTER OD. DGL.**
BRAKING DEVICE FOR ROLLER SKATES, SKATEBOARDS, OR THE LIKE
DISPOSITIF DE FREINAGE POUR DES PATINS À ROULETTES, DES PLANCHES À ROULETTES OU SIMILAIRES

(30) Priorität: 06.07.2011 AT 9882011
(43) Veröffentlichungstag der Anmeldung: 14.05.2014
(73) Patentinhaber: Bodner, Peter, 9805 Baldramsdorf (AT)
(72) Erfinder: Bodner, Peter, 9805 Baldramsdorf (AT)
(74) Vertreter: Weiser, Andreas
(86) Internationale Anmeldenummer: PCT/AT2012/050082
(87) Internationale Veröffentlichungsnummer: WO 2013/003875

(56) Entgegenhaltungen:
- WO-A1-2006/083102
- DE-A1- 10 048 786
- DE-A1- 19 837 364

## Beschreibung

Die vorliegende Erfindung betrifft eine Bremsvorrichtung für Rollschuhe, Rollbretter oder dergleichen, mit einem Rollenträger, in dem eine Rolle zwischen einer ersten frei drehbaren Stellung und einer zweiten abgebremsten Stellung axialverschieblich gelagert ist.

Rollschuhe, insbesondere Inlineskates, und Rollbretter (Skateboards) werden heute vielfach mittels eines im Fersenbereich bzw. bei Rollbrettern im rückwärtigen Bereich montierten Gummistoppers gebremst, der bei Anheben der vorderen Rollen am Boden aufliegt. Nachteilig sind dabei die eingeschränkte Lenkbarkeit beim Bremsen, der hohe Verschleiß des Gummistoppers und die Kraftaufbringung beim Anheben des Fußes bei längeren Bergabfahrten oder starken Bodenunebenheiten.

Im Stand der Technik sind auf zumindest eine der Rollen eines Rollschuhs oder Rollbretts wirkende Bremsen bekannt, welche mittels eines Hebels von Hand (siehe z.B. DE 100 48 786 A1 , das eine Bremsvorrichtung gemäß dem Oberbegriff von Anspruch 1 beschreibt) oder mittels eines Bügels vom Unterschenkel des Fahrers (z.B. DE 103 33 378 A1) betätigt werden. Derartige Systeme erfordern eine spezielle, zu erlernende Körperhaltung beim Bremsen und bedürfen einer Anpassung an den Fahrer.

Aus der WO 01/64302 A1 ist bekannt, eine Rolle durch Aufbringen einer axialen Kraft gegenüber ihrer Drehachse zu verschwenken, was ein Reiben der Rolle an ihrem Lagerrahmen am Rollschuh und dadurch eine Bremswirkung zur Folge hat.

Die US 6 102 168 zeigt ein in einer Rolle angeordnetes Scheibenbremsmodul nach Art einer Lamellenkupplung. Wird die Rolle durch Schrägstellen des Rollschuhs axial kraftbeaufschlagt und damit axialverschoben, werden die Lamellen zusammengepresst und somit das Rad abgebremst. Der Anpressdruck der Bremsscheiben entspricht der auf die Rolle einwirkenden Axialkraft und erfordert so für stärkere Bremsmanöver ein starkes Schrägstellen der Rollschuhe, was wiederum zu instabilem Fahrverhalten und starkem, asymmetrischem Abrieb an der Rolle führt.

Der Erfindung liegt die Aufgabe zugrunde, diese Nachteile zu überwinden und eine kräftesparende und ergonomische Bedienung einer Bremse zu ermöglichen, um die Fahrgeschwindigkeit mit geringem Kraftaufwand effektiv und leicht steuerbar reduzieren zu können.

Dieses Ziel wird mit einer Bremsvorrichtung der eingangs genannten Art erreicht, welche sich durch eine gegenüber dem Rollenträger abgestützte betätigbare Bremseinheit auszeichnet, deren Bremsbetätigungskraft über eine in der ersten Stellung geöffnete und zweiten Stellung geschlossene Kupplungseinheit mit nachgeordneter Übersetzungseinheit aus dem Drehmoment der Rolle erzeugt ist.

Gemäß der Erfindung wird die Bremsbetätigungskraft aus der Drehbewegung der Rolle durch Auskuppeln eines Drehmoments erzeugt - die Bremsvorrichtung ist gleichsam "selbstverstärkend". Dank der Kupplungs- und der Übersetzungseinheit kann bereits bei geringer Schrägstellung und damit geringer Axialkraft eine hohe Bremskraft und damit eine starke Bremswirkung erzielt werden; das Fahrverhalten des Rollschuhs bzw. Rollbretts bleibt stabil und leicht kontrollierbar.

Um ein versehentliches Bremsen während der Fahrt zu verhindern, ist bevorzugt die Rolle in Richtung der ersten Stellung gegenüber dem Rollenträger federbeaufschlagt. Die erste Stellung, in welcher die Rolle frei drehbar ist, wird so zur Grundstellung, welche die Rolle bei Ausbleiben einer Axialkraft einnimmt.

Bevorzugt hat die Kupplungseinheit zwei zur Achse der Rolle normale, miteinander in Reibeingriff bringbare Kupplungsflächen, von denen die erste mit der Rolle drehfest verbunden und die zweite um die Achse schwenk- oder drehbar gelagert ist, um ein Drehmoment auszukuppeln. Dadurch übernimmt die Rolle einen Teil der Kupplungsfunktion und die Bremsvorrichtung kann mit weniger Teilen und kompakter gebaut werden.

Besonders bevorzugt sind die Kupplungsflächen radial innerhalb von Bremsflächen der Bremseinheit angeordnet. Dies ermöglicht größere Bremsflächen, die bei gleicher Bremsbetätigungskraft ein größeres Bremsmoment und somit eine stärkere Bremswirkung erzielen.

Vorteilhaft ist es, wenn eine zwischen erster und zweiter Kupplungsfläche liegende Tellerfeder vorgesehen ist. Eine solche Tellerfeder trennt die beiden Kupplungsflächen bei Nachlassen der Axialkraft und drückt die Rolle in ihre erste Stellung. Dabei kann eine weitere Federbeaufschlagung der Rolle in Richtung der ersten Stellung entfallen, was besonders kurze Wege zwischen erster und zweiter Stellung der Rolle und damit zur Bremsensteuerung ermöglicht.

In einer weiteren bevorzugten Ausführungsform der Erfindung weist die Übersetzungseinheit einen vom Ausgang der Kupplungseinheit angetriebenen Nocken auf, welcher auf einen Hebel zum Erzeugen der Bremsbetätigungskraft wirkt. So ist durch Wahl von Nockensteigung und Hebelarmlänge das Verhältnis zwischen ausgekuppeltem Drehmoment und erzeugter Bremsbetätigungskraft in der Konstruktion vorwählbar. Zugleich ermöglicht der Einsatz eines Nocken eine vom Verschleiß z.B. der Bremsflächen der Bremseinheit unabhängige Bremsbetätigung, da der Nocken diesen Effekt kompensiert.

Um nach dem Bremsen das Rückstellen des Nockens zu erleichtern, kann auch der Nocken entgegen seiner Betätigungsrichtung federbeaufschlagt sein.

Ist eine noch höhere Bremsbetätigungskraft erwünscht, so kann die Übersetzungseinheit ferner ein zwischen Kupplungseinheit und Nocken wirkendes Getriebe aufweisen.

Bevorzugt ist die Bremseinheit eine Trommelbremse mit zumindest zwei vom Hebel betätigten Bremsbacken, die auf eine von der Rolle gebildete Bremstrommel wirken. Dies ergibt eine besonders kompakte Bauweise der Bremsvorrichtung, die dabei geschlossen und somit vor Verschmutzung geschützt sein kann, wodurch sie robust und haltbar ist.

Alternativ dazu kann die Bremseinheit eine Scheibenbremse mit zumindest zwei vom Hebel betätigten Bremsklötzen sein, die auf eine an der Rolle ausgebildete Bremsscheibe wirken. Eine Scheibenbremse führt zu einer gleichmäßigen Bremskraftverteilung, kann nachstellbar ausgeführt werden und weist ein geringeres Gewicht auf als eine Trommelbremse.

In einer vorteilhaften Variante sind die Bremsbacken oder -klötze entgegen der Bremsbetätigungskraft federbeaufschlagt. Dadurch öffnen diese bei Wegfallen der Bremsbetätigungskraft die Bremse selbsttätig; ein unerwünschtes Schleifen oder Blockieren während der Fahrt kann so verhindert werden.

Besonders bevorzugt wird die Bremsvorrichtung integriert aufgebaut, wobei die Achse der Rolle drehfest mit dem Rollenträger verbunden ist und auf ihr ein scheibenförmiger Bremsenträger sitzt, welcher sowohl den Hebel als auch die von diesem betätigten Bremsbacken oder -klötze lagert. Dadurch ist ein Austausch der gesamten Bremsvorrichtung durch Tausch von Achse und Rollenträger auf einfache Weise möglich. Auch können bestehende Rollschuhe oder Rollbretter ohne Schwierigkeit mit einer Bremsvorrichtung gemäß der Erfindung nachgerüstet werden.

Die Erfindung wird nachstehend anhand von in den beigeschlossenen Zeichnungen dargestellten Ausführungsbeispielen näher erläutert. In den Zeichnungen zeigen:
Fig. 1 ein Ausführungsbeispiel der erfindungsgemäßen Bremsvorrichtung im unbetätigten Zustand in einem Schnitt entlang der Drehachse;
Fig. 2 die Bremsvorrichtung von Fig. 1 in einem Schnitt normal zur Drehachse;
die Fig. 3a und 3b schematisch die Funktion der Bremsvorrichtung der Fig. 1 und 2 anhand ihres unbetätigten Zustands (Fig. 3a) und ihres betätigten Zustands (Fig. 3b); und
die Fig. 4 und 5 alternative Ausführungsbeispiele der erfindungsgemäßen Bremsvorrichtung mit einer in einen Rollenträger integrierten Trommelbremse (Fig. 4) bzw. Scheibenbremse (Fig. 5) jeweils schematisch in einem Schnitt entlang der Drehachse.

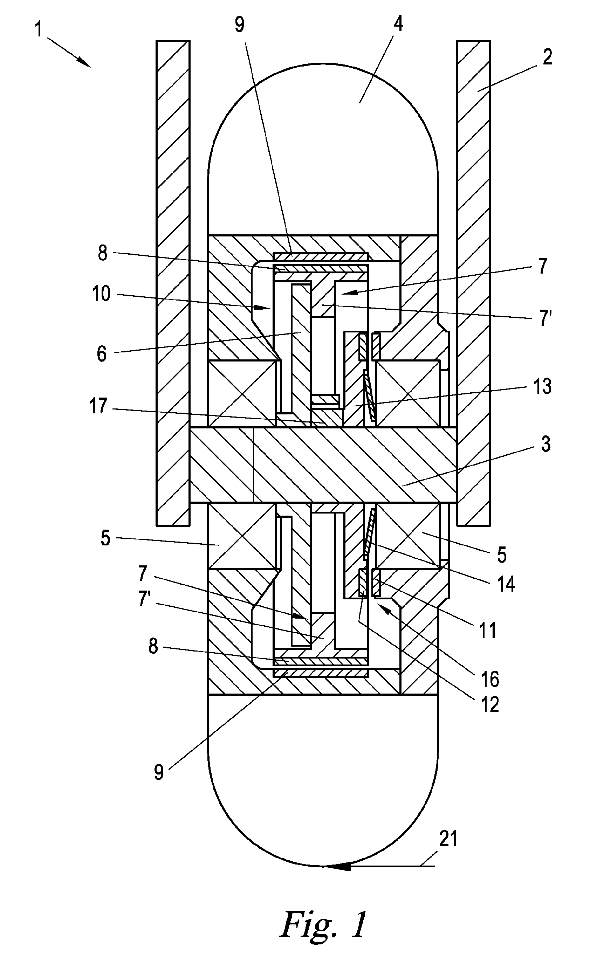

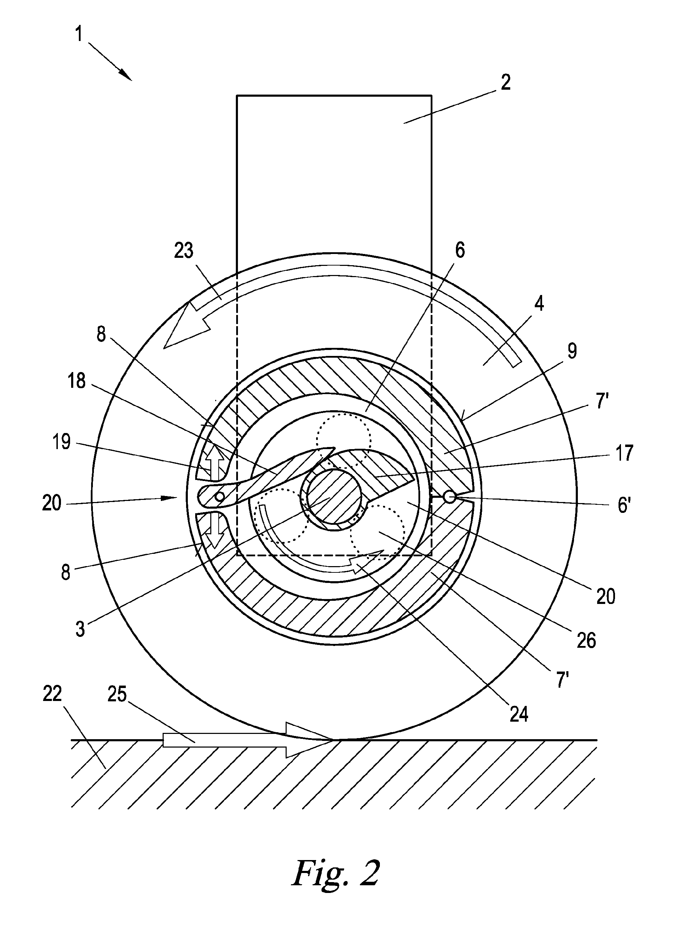

Die Fig. 1 und 2 zeigen eine erfindungsgemäße Bremsvorrichtung 1 für Rollschuhe, Inlineskates, Rollbretter, Skateboards od.dgl. mit einem Rollenträger 2, in dem eine Achse 3 fixiert ist. Auf der Achse 3 ist eine Rolle 4 mittels zweier Lager 5 drehbar und axialverschieblich gelagert. Alternativ könnte auch die Rolle 4 mit der Achse 3 drehfest sein und letztere im Rollenträger 2 drehbar sowie axialverschieblich gelagert sein (nicht gezeigt).

Auf der Achse 3 sitzt drehfest ein etwa scheibenförmiger Bremsenträger 6, welcher ein Bremselement 7 trägt. In der in den Fig. 1 und 2 gezeigten Ausführungsform ist das Bremselement 7 durch zwei Bremsbacken 7' einer Trommelbremse gebildet, welche am Bremsenträger 6 bei 6' radial nach außen schwenkbar gelagert sind und an ihren äußeren Mantelflächen erste Bremsflächen 8 bilden. An einem in der Rolle 4 ausgebildeten Innenzylinder liegt eine zweite Bremsfläche 9, welche die Bremsbacken 7' in der dargestellten unbetätigten Stellung der Bremsvorrichtung 1 mit Abstand umgibt. Der Bremsenträger 6, das Bremselement 7 mit den ersten Bremsflächen 8 und die zweite Bremsfläche 9 bilden eine Bremseinheit 10.

Die Rolle 4 weist ferner radial innerhalb ihrer Bremsfläche 9 eine zur Achse 3 normale, kreisringförmige erste Kupplungsfläche 11 auf. Der ersten Kupplungsfläche 11 parallel, etwa deckungsgleich und - in der unbetätigten Stellung der Bremsvorrichtung 1 mit Abstand - gegenüber liegt eine zweite Kupplungsfläche 12. Die zweite Kupplungsfläche 12 sitzt auf einer um die Achse 3 dreh- oder zumindest schwenkbar gelagerten Kupplungsscheibe 13. Erste und zweite Kupplungsflächen 11, 12 sind durch ein Federelement 14, z.B. eine Tellerfeder, getrennt. Die Kupplungsscheibe 13, das Federelement 14 und die beiden Kupplungsflächen 11, 12 bilden eine Kupplungseinheit 16.

Am Ausgang der Kupplungseinheit 16 und von deren Kupplungsscheibe 13 angetrieben sitzt ein Nocken 17, welcher auf einen am Bremsenträger 6 schwenkbar gelagerten Hebel 18 zum Erzeugen einer Betätigungskraft 19 für die Bremseinheit 10 wirkt. Nocken 17, Hebel 18 und Bremsenträger 6 bilden zusammen eine Übersetzungseinheit 20. In einer alternativen (nicht gezeigten) Ausführungsform könnte der Hebel 18 entfallen und der Nocken 17 direkt auf die Bremseinheit wirken. Die Übersetzungseinheit 20 kann daher in einfachen Fällen auch durch den Nocken 17 (mit seiner Lagerung) oder irgendein anderes bewegliches Glied zur Kraftübertragung gebildet werden.

Die Rolle 4 ist mitsamt ihren Lagern 5 auf der Achse 3 zwischen einer ersten Stellung, in welcher sie um die Achse 3 frei drehbar ist und eines der Lager 5 (in Fig. 1 das linke Lager 5) am Bremsenträger 6 anschlägt, und einer zweiten Stellung, in der die beiden Kupplungsflächen 11, 12 der Kupplungseinheit 16 miteinander im Reibeingriff stehen, axialverschieblich. Alternativ könnten auch die Lager 5 axialfest und die Rolle 4 gegenüber den Lagern 5 zwischen den beiden Stellungen axialverschieblich sein.

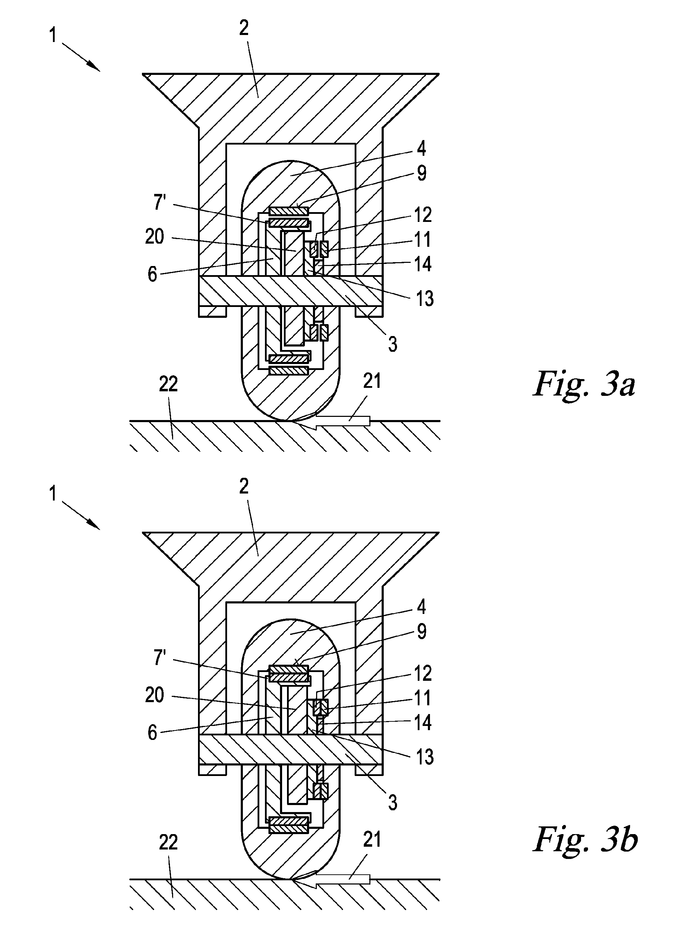

Die Fig. 3a bzw. 3b stellen die Funktionsweise der Bremsvorrichtung 1 anhand der beiden Stellungen der Rolle 4 schematisch vereinfacht dar.

In Fig. 3a befindet sich die Rolle 4 in der ersten Stellung, in welcher sie um die Achse 3 frei drehbar ist. Dabei sind die beiden Kupplungsflächen 11, 12 voneinander beabstandet, sodass darüber kein Drehmoment übertragen wird. Die Bremsvorrichtung 1 ist nun unbetätigt: Das Bremselement 7 mit den ersten Bremsflächen 8 liegt nicht an der zweiten Bremsfläche 9 der Rolle 4 an, die Bremseinheit 10 ist geöffnet. Die Rolle 4 wird durch das Federelement 14 in dieser ersten Stellung gehalten.

In Fig. 3b wirkt in Axialrichtung auf die Rolle 4 eine seitliche Steuerkraft 21, welche die Federkraft des Federelements 14 übersteigt. Eine solche seitliche Steuerkraft 21 kann z.B. durch ein Schrägstellen der am Boden 22 abrollenden Rolle 4 erzeugt werden, etwa durch Kippen des Rollschuhs oder Rollbretts um seine Längsachse und/oder Drehen um seine Hochachse. Dabei wird die Rolle 4 auf der Achse 3 axialverschoben und die beiden Kupplungsflächen 11, 12 gelangen miteinander in Reibeingriff, wodurch die Kupplungsscheibe 13 einen Teil des Drehmoments 23, welches die Rolle 4 vom Boden 22 erfährt, auskuppelt.

Mit dem ausgekuppelten Drehmoment 24 treibt die Kupplungsscheibe 13 am Ausgang der Kupplungseinheit 16 den Nocken 17 an. Der angetriebene Nocken 17 wirkt weiter auf den Hebel 18, welcher die Bremsbetätigungskraft 19 auf das Bremselement 7 überträgt; die Bremsbacken 7' mit den ersten Bremsflächen 8 werden dabei mit der Bremsbetätigungskraft 19 an die zweite Bremsfläche 9 der Rolle 4 gepresst und die Bremseinheit 10 ist geschlossen, die Bremsvorrichtung 1 ist nun betätigt. Zwischen Rolle 4 und Boden 22 kann dadurch eine gegen die Fahrtrichtung gerichtete Bremskraft 25 aufgebaut werden; der Rollschuh bzw. das Rollbrett wird gebremst.

Wie an der beispielhaften Form des Nockens 17 in Fig. 2 erkennbar, wird dieser bei größerem ausgekuppelten Drehmoment 24 um einen größeren Winkel verdreht, wobei seine Wirkung auf den Hebel 18 und damit die Bremsbetätigungskraft 19 und die Bremskraft 25 steigen. Die Größe des ausgekuppelten Drehmoments 24 ist abhängig von der seitlichen Steuerkraft 21 und der Stärke des Reibeingriffs der Kupplungsflächen 11, 12. Je nach konstruktiver Auslegung, z.B. der Steigung am Nocken 17, der Armlängen am Hebel 18, der Lage, Größe und des Reibfaktors der Kupplungsflächen 11, 12 und der Gestaltung der Bremseinheit 10, kann bereits mit einer geringen seitlichen Steuerkraft 21 ein großes Drehmoment 24 ausgekuppelt bzw. selbst mit einem kleinen ausgekuppelten Drehmoment 24 eine hohe Bremsbetätigungskraft 19 und damit eine hohe Bremskraft 25 erzeugt werden. Die Bremsvorrichtung 1 nutzt das Drehmoment 23 der Rolle 4 gleichsam zur "Selbstverstärkung".

Um die Bremsbetätigungskraft 19 noch weiter zu erhöhen, könnte die Übersetzungseinheit 20 ferner ein zwischen Kupplungseinheit 16 und Nocken 17 wirkendes Getriebe 26, z.B. wie in Fig. 2 strichliert angedeutet ein Planeten-, Stirnrad- oder Seilzuggetriebe, aufweisen. Alternativ (nicht gezeigt) könnte auch der Nocken 17 selbst durch einen von der Kupplungseinheit 16 angetriebenen Seilzug, welcher direkt auf den Hebel 18 wirkt, ersetzt sein, oder ein solcher Seilzug ersetzt auch den Hebel 18 und wirkt dabei direkt auf das Bremselement 7.

Wird die seitliche Steuerkraft 21 reduziert, so verringern sich das ausgekuppelte Drehmoment 24 und folglich der Schwenkwinkel des Nockens 17, die Stellung des Hebels 18 und damit Bremsbetätigungskraft 19 und Bremskraft 25. Unterschreitet die seitliche Steuerkraft 21 die Kraft des Federelements 14, so wird der Reibeingriff der Kupplungseinheit 16 gänzlich gelöst. Nocken 17, Hebel 18 und Bremsbacken 7' schwenken in ihre jeweiligen Ausgangsstellungen gemäß den Fig. 2 und 3a und die Rolle 4 ist wieder frei drehbar.

Um das Lösen der Bremseinheit 10 weiter zu erleichtern, verfügt die Bremsvorrichtung 1 - zusätzlich zum Federelement 14 - optional über ein Rückstellelement (nicht gezeigt), welches die Bremsbacken 7' entgegen der Bremsbetätigungskraft 19 und/oder den Nocken 17 entgegen seiner Betätigungsrichtung federbeaufschlagt und so die Rückführung der Bremseinheit 10 in die unbetätigte Ausgangsposition bewerkstelligt.

Die Fig. 1, 3a und 3b zeigen, dass die Kupplungsflächen 11, 12 radial innerhalb der Bremsflächen 8, 9 angeordnet sind und in ihrer Fläche kleiner sein können als diese, da die zwischenliegende Übersetzungeeinheit 20 die Kraft des von ihnen ausgekuppelten Drehmoments 24 auf die Bremskraft 25 der Bremsflächen 8, 9 verstärkt.

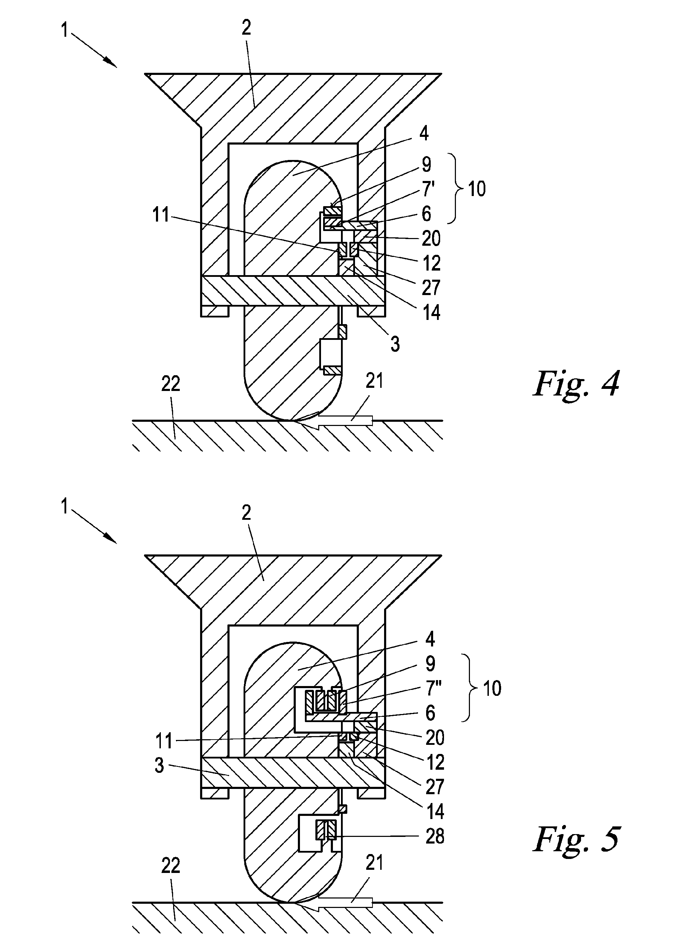

Fig. 4 zeigt eine alternative Ausführungsform der Bremsvorrichtung 1, in der ein die zweite Kupplungsfläche 12 tragendes Kupplungselement 27 der Kupplungseinheit 16 am Rollenträger 2 neben der - nur schematisch dargestellten - Übersetzungseinheit 20 sitzt, welche über den hier ebenfalls im Rollenträger 2 gelagerten Bremsenträger 6 auf das Bremselement 7 und dieses auf die zweite Bremsfläche 9 der Rolle 4 wirkt.

Die Bremseinheit 10 von Fig. 4 ist wieder eine Trommelbremse, alternativ kann sie jedoch auch eine andere Reibungsbremse sein, wobei die Rolle 4 gegebenenfalls die zweite Bremsfläche 9 an einer Seitenfläche und/oder einem dazu ausgebildeten Außenumfang trägt (nicht gezeigt).

Fig. 5 zeigt eine weitere Ausführungsform der Bremsvorrichtung 1, in welcher die Bremseinheit 10 eine Scheibenbremse mit zumindest zwei über die Übersetzungseinheit 20 betätigten Bremsklötzen 7" ist, die eine an der Rolle 4 ausgebildete Bremsscheibe 28 mit beidseitigen Bremsflächen 9 randseitig umgreifen. Im Fall einer Scheibenbremse könnten die Bremsklötze 7" entgegen der Bremsbetätigungskraft 19 durch das Rückstellelement federbeaufschlagt sein.

Die Erfindung ist nicht auf die dargestellten Ausführungsformen beschränkt, sondern umfasst alle Varianten, Kombinationen und Modifikationen, die in den Rahmen der angeschlossenen Ansprüche fallen. So könnten Bremseinheit 10, Kupplungseinheit 16 und Übersetzungseinheit 20 auch in der Ausführungsvariante mit Scheibenbremse vollständig im Inneren der Rolle 4 angeordnet sein, ähnlich wie dies Fig. 1 für die Bremsvorrichtung 1 mit Trommelbremse zeigt. Ferner kann die Rolle 4 alternativ zur dargestellten, im Querschnitt abgerundeten Lauffläche eine abgeflachte Lauffläche haben. Selbstverständlich könnte die Bremsvorrichtung 1 auch mehr als eine oder sogar alle herkömmlichen Rollen eines Rollschuhs oder Rollbretts ersetzen.

## Patentansprüche

1. Bremsvorrichtung (1) für Rollschuhe, Rollbretter od. dgl., mit einem Rollenträger (2), in dem eine Rolle (4) zwischen einer ersten frei drehbaren Stellung und einer zweiten abgebremsten Stellung axialverschieblich gelagert ist, mit einer gegenüber dem Rollenträger (2) abgestützten betätigbaren Bremseinheit (10), **dadurch gekennzeichnet, dass** die Bremsbetätigungskraft (19) der Bremseinheit über eine in der ersten Stellung geöffnete und zweiten Stellung geschlossene Kupplungseinheit (16) mit nachgeordneter Übersetzungseinheit (20) aus dem Drehmoment (23) der Rolle (4) erzeugt ist.

2. Bremsvorrichtung nach Anspruch 1, **dadurch gekennzeichnet, dass** die Rolle (4) in Richtung der ersten Stellung gegenüber dem Rollenträger (2) federbeaufschlagt ist.

3. Bremsvorrichtung nach Anspruch 1 oder 2, **dadurch gekennzeichnet, dass** die Kupplungseinheit (16) zwei zur Achse (3) der Rolle (4) normale, miteinander in Reibeingriff bringbare Kupplungsflächen (11, 12) hat, von denen die erste mit der Rolle (4) drehfest verbunden und die zweite um die Achse (3) schwenk- oder drehbar gelagert ist, um ein Drehmoment (24) auszukuppeln.

4. Bremsvorrichtung nach Anspruch 3, **dadurch gekennzeichnet, dass** die Kupplungsflächen (11, 12) radial innerhalb von Bremsflächen (8, 9) der Bremseinheit (10) angeordnet sind.

5. Bremsvorrichtung nach Anspruch 3 oder 4, **dadurch gekennzeichnet, dass** eine zwischen erster und zweiter Kupplungsfläche (11, 12) wirkende Tellerfeder (14) vorgesehen ist.

6. Bremsvorrichtung nach einem der Ansprüche 1 bis 5, **dadurch gekennzeichnet, dass** die Übersetzungseinheit (20) einen vom Ausgang der Kupplungseinheit (16) angetriebenen Nocken (17) aufweist, welcher auf einen Hebel (18) zum Erzeugen der Bremsbetätigungskraft (19) wirkt.

7. Bremsvorrichtung nach Anspruch 6, **dadurch gekennzeichnet, dass** der Nocken (17) entgegen seiner Betätigungsrichtung federbeaufschlagt ist.

8. Bremsvorrichtung nach Anspruch 6 oder 7, **dadurch gekennzeichnet, dass** die Übersetzungseinheit (20) ferner ein zwischen Kupplungseinheit (16) und Nocken (17) wirkendes Getriebe (26) aufweist.

9. Bremsvorrichtung nach einem der Ansprüche 6 bis 8, **dadurch gekennzeichnet, dass** die Bremseinheit (10) eine Trommelbremse mit zumindest zwei vom Hebel (18) betätigten Bremsbacken (7') ist, die auf eine von der Rolle (4) gebildete Bremstrommel wirken.

10. Bremsvorrichtung nach einem der Ansprüche 6 bis 8, **dadurch gekennzeichnet, dass** die Bremseinheit (10) eine Scheibenbremse mit zumindest zwei vom Hebel (18) betätigten Bremsklötzen (7") ist, die auf eine an der Rolle (4) ausgebildete Bremsscheibe (28) wirken.

11. Bremsvorrichtung nach Anspruch 9 oder 10, **dadurch gekennzeichnet, dass** die Bremsbacken (7') oder -klötze (7") entgegen der Bremsbetätigungskraft (19) federbeaufschlagt sind.

12. Bremsvorrichtung nach einem der Ansprüche 9 bis 11, **dadurch gekennzeichnet, dass** die Achse (3) der Rolle (4) drehfest mit dem Rollenträger (2) verbunden ist und auf ihr ein scheibenförmiger Bremsenträger (6) sitzt, welcher sowohl den Hebel (18) als auch die von diesem betätigten Bremsbacken (7') oder -klötze (7") lagert.

## Claims

1. Braking device (1) for roller skates, skateboards, or the like having a roller support (2), in which a roller (4) is mounted axially movable between a first freely rotatable position and a second braked position, with an actuatable brake unit supported relative to the roller support, **characterized in that** the brake actuation force (19) of the brake unit is produced from the torque (23) of the roller (4) using a coupling unit (16) that is open in the first position and closed in the second position and that has a downstream transmission unit (20).

2. Braking device according to claim 1, **characterized in that** the roller (4) is spring-loaded towards the first position relative to the roller support (2).

3. Braking device according to claim 1 or 2, **characterized in that** the coupling unit (16) has two coupling surfaces (11, 12) that are normal to the axle (3) of the roller (4) and may be caused to frictionally engage one another, of which coupling surfaces (11, 12) the first is joined rotation-fast to the roller (4) and the second is borne pivotably or rotatably about the axle (3) so that torque (24) can be decoupled.

4. Braking device according to claim 3, **characterized in that** the coupling surfaces (11, 12) are arranged radially within the brake surfaces (8, 9) of the brake unit (10).

5. Braking device according to claim 3 or 4, **characterized in that** a disk spring (14) that acts between the first and second coupling surfaces (11, 12) is provided.

6. Braking device according to any of claims 1 through 5, **characterized in that** the transmission unit (20) has a cam (17) driven by the output of the coupling unit (16), which cam (17) acts on a lever (18) for producing the brake actuation force (19).

7. Braking device according to claim 6, **characterized in that** the cam (17) is spring-loaded against its actuation direction.

8. Braking device according to claim 6 or 7, **characterized in that** the transmission unit (20) further has a gear (26) acting between coupling unit (16) and cam (17).

9. Braking device according to any of claims 6 through 8, **characterized in that** the brake unit (10) is a drum brake having at least two brake shoes (7') that are actuated by the lever (18) and that act on a brake drum formed by the roller (4).

10. Braking device according to any of claims 6 through 8, **characterized in that** the brake unit (10) is a disc brake having at least two brake pads (7") that are actuated by the lever (18) and that act on a brake disk (28) embodied on the roller (4).

11. Braking device according to claim 9 or 10, **characterized in that** the brake shoes (7') or brake pads (7") are spring-loaded against the brake actuation force (19).

12. Braking device according to any of claims 9 through 11, **characterized in that** the axle (3) of the roller (4) is joined rotation-fast to the roller support (2) and a disk-like brake support (6) is seated thereon that bears both the lever (18) and the brake shoes (7') or brake pads (7") actuated by the lever (18).

## Revendications

1. Dispositif de freinage (1) pour patins à roulettes, planches à roulettes ou similaires, avec un support de roulettes (2), dans lequel est logée une roulette (4), pouvant se déplacer axialement entre une première position en rotation libre et une deuxième position de freinage, avec une unité de freinage (10) pouvant être actionnée et étant soutenue par rapport au support de roulettes (2), **caractérisé en ce que** la force d'actionnement de freinage (19) de l'unité de freinage est générée à partir du couple de rotation (23) de la roulette (4) par l'intermédiaire d'une unité d'accouplement (16), avec une unité de transmission (20) disposée postérieurement, ouverte dans la première position et fermée dans la deuxième position.

2. Dispositif de freinage selon la revendication 1, **caractérisé en ce que** la roulette (4) est soumise à l'action d'un ressort dans la direction de la première position par rapport au support de roulettes (2).

3. Dispositif de freinage selon la revendication 1 ou 2, **caractérisé en ce que** l'unité d'accouplement (16) possède deux surfaces d'accouplement (11, 12) normales par rapport à l'axe (3) de la roulette (4), pouvant être mises ensemble en prise par friction, parmi lesquelles la première est reliée avec la roulette (4), bloquée en rotation par rapport à celle-ci, et la deuxième est logée en pouvant pivoter ou être en rotation autour de l'axe (3), afin de désaccoupler un couple de rotation (24).

4. Dispositif de freinage selon la revendication 3, **caractérisé en ce que** les surfaces d'accouplement (11, 12) sont disposées radialement à l'intérieur des surfaces de freinage (8, 9) de l'unité de freinage (10).

5. Dispositif de freinage selon la revendication 3 ou 4, **caractérisé en ce que** une rondelle-ressort (14) active entre la première et la deuxième surface d'accouplement (11, 12) est prévue.

6. Dispositif de freinage selon l'une des revendications 1 à 5, **caractérisé en ce que** l'unité de transmission (20) présente une came (17), entraînée par une sortie de l'unité d'accouplement (16), laquelle came agit sur un levier (18) pour la création de la force d'actionnement de freinage (19).

7. Dispositif de freinage selon la revendication 6, **caractérisée en ce que** la came (17) est soumise à l'action d'un ressort dans le sens contraire à sa direction d'actionnement.

8. Dispositif de freinage selon les revendications 6 ou 7, **caractérisée en ce que** l'unité de transmission (20) présente en outre une transmission (26) agissant entre l'unité d'accouplement (16) et la came (17).

9. Dispositif selon l'une des revendications 6 à 8, **caractérisé en ce que** l'unité de freinage (10) est constituée d'un frein à tambour avec au moins deux segments de frein (7'), actionnés par le levier (18), qui agissent sur un tambour de frein formé par la roulette (4).

10. Dispositif de freinage selon l'une des revendications 6 à 8, **caractérisé en ce que** l'unité de freinage (10) est constituée d'un frein à disques avec au moins deux plaquettes de frein (7"), actionnées par le levier (18), qui agissent sur un disque de frein (28) formé sur la roulette (4).

11. Dispositif de freinage selon la revendication 9 ou 10, **caractérisé en ce que** les segments de frein (7') ou les plaquettes de frein (7") sont soumises à l'action d'un ressort dans le sens contraire à la force d'actionnement de freinage (19).

12. Dispositif de freinage selon l'une des revendications 9 à 11, **caractérisé en ce que** l'axe (3) de la roulette (4) est relié avec le support de roulette (2), bloqué en rotation par rapport à celle-ci, et un support de frein (6) en forme de disque y repose, lequel offre un siège à la fois au levier (18) et également aux segments de frein (7') ou aux plaques de frein (7") qui sont actionnés par celui-ci.
